# EUROPÄISCHE PATENTSCHRIFT

(11) **EP 1 535 477 B1**
(45) Veröffentlichungstag und Bekanntmachung des Hinweises auf die Patenterteilung: **26.04.2006**
(21) Anmeldenummer: 03794783.5
(22) Anmeldetag: 11.08.2003
(51) Int. Cl.: H04Q 3/00, H04M 7/00, H04L 29/06

(54) **VERFAHREN ZUM WEITERLEITEN VON SIGNALISIERUNGSNACHRICHTEN UND ZUGEHÖRIGE KOMPONENTEN**
METHOD FOR FORWARDING SIGNALLING MESSAGES AND CORRESPONDING COMPONENTS
PROCEDE POUR TRANSMETTRE DES MESSAGES DE SIGNALISATION ET DES COMPOSANTS ASSOCIES

(30) Priorität: 05.09.2002 DE 10241197
(43) Veröffentlichungstag der Anmeldung: 01.06.2005
(73) Patentinhaber: SIEMENS AKTIENGESELLSCHAFT, 80333 München (DE)
(72) Erfinder: BOZIONEK, Bruno, 33178 Borchen (DE); HEMKEMEYER, Dieter, 59302 Ölde (DE); ZIMMERMANN, Rainer, 33106 Paderborn (DE)
(86) Internationale Anmeldenummer: PCT/DE2003/002698
(87) Internationale Veröffentlichungsnummer: WO 2004/025968

(56) Entgegenhaltungen:
- EP-A- 0 926 909
- EP-A- 1 143 683
- DE-A- 10 040 444

## Beschreibung

Die Erfindung betrifft ein Verfahren, bei dem Signalisierungsnachrichten empfangen werden, die jeweils ein Zieldatum enthalten. Das Zieldatum gibt eine Zieleinheit an, an die die Signalisierungsnachricht weiterzuleiten ist. Alternativ lässt sich mit dem Zieldatum ein Zieleinheit ermitteln, an die die Signalisierungsnachricht weiterzuleiten ist.

Die Signalisierungsnachrichten werden gemäß verschiedener Signalisierungsprotokolle über ein Datenübertragungsnetz übertragen. Das Datenübertragungsnetz ist beispielsweise ein Datenpaketübertragungsnetz oder ein Datenübertragungsnetz, bei dem die Daten in Zeitkanälen übertragen werden.

Die Signalisierung betrifft insbesondere Vorschriften zum Austausch von Informationen, die den Aufbau, den Abbau und die Kontrolle einer Verbindung betreffen. Dabei besteht die Verbindung beispielsweise nur auf höheren Protokollebenen, während die Übertragung der Nutzdaten und der Signalisierungsdaten auf unteren Protokollebenen verbindungslos ist. Eine andere Art von Signalisierungsnachrichten sind beispielsweise Nachrichten, mit denen der Schaltzustand eines Gerätes an ein anderes Gerät signalisiert wird, ohne dass zu dem anderen Gerät eine Nutzdatenübertragungsverbindung bestehen muss.

Ein Signalisierungsprotokoll ist die Gesamtheit von Steuerungsverfahren und Betriebsvorschriften, nach denen die Signalisierung zwischen zwei oder mehreren zusammenarbeitenden Funktionseinheiten durchgeführt wird. Die Protokolle sind üblicherweise für eine bestimmte Schnittstelle festgelegt. Alle Protokolle einer Kommunikationsbeziehung bilden einen sogenannten Protokollstapel.

Eine Schnittstelle ist die Verbindungsstelle zwischen zwei Systemen und ist auf einer logischen oder einer physikalischen Ebene festgelegt. So gibt es beispielsweise eine Schnittstelle zwischen verschiedenen Telekommunikationsanlagen oder Schnittstellen zum Anschluss von Teilnehmerendgeräten.

Werden Signalisierungsnachrichten gemäß verschiedener Signalisierungsprotokolle empfangen, so wäre es zum Gewährleisten einer einheitlichen Bearbeitung der Signalisierungsnachrichten möglich, die Signalisierungsnachrichten in einer zentralen Kommunikationseinrichtung zunächst in interne Signalisierungsnachrichten umzuwandeln, die ein allgemeines Signalisierungsprotokoll erfüllen. Das allgemeine Signalisierungsprotokoll müsste dann die Obermenge aller benötigten Informationselemente umfassen. Nach der zentralen Verarbeitung der Signalisierungsnachricht würde diese dann in eine Signalisierungsnachricht gemäß einem Signalisierungsprotokoll der Zieleinheit umzusetzen sein.

Aus dem Standard H.323 Annex M.1 ist auch ein Verfahren zur Weiterleitung von Signalisierungsnachrichten bekannt, bei dem von einer Ursprungseinheit QSIG-Signalisierungsnachrichten getunnelt Ober ein H.323-Netzwerk an eine Netzzugangseinheit (Gatekeeper) übermittelt werden, und von der Netzzugangseinheit die QSIG-Signalisierungsnachrichten unverändert über das H.323-Netzwerk getunnelt an eine Zieleinheit weitergeleitet werden.

Es ist Aufgabe der Erfindung, zum Weiterleiten von Signalisierungsnachrichten ein einfaches Verfahren anzugeben, das insbesondere Datenverluste vermeidet, das insbesondere mit einem kleinen gerätetechnischen Aufwand durchführbar ist und das insbesondere schnell ausgeführt werden kann. Außerdem sollen ein zugehöriges Programm und eine zugehörige Vorrichtung angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass eine Umsetzung von Signalisierungsnachrichten gemäß einem Signalisierungsprotokoll in Signalisierungsnachrichten gemäß einem anderen Signalisierungsprotokoll nur dann durchgeführt werden sollte, wenn dies auch wirklich unvermeidbar ist. Elektronische Schaltungen bzw. Prozessoren werden so nur zur Umsetzung für einen Teil der weiterzuleitenden Signalisierungsnachrichten benötigt. Bei vielen Umsetzungen treten Verluste von Daten auf, weil sich eine bestimmte Signalisierungsnachricht gemäß dem einen Signalisierungsprotokoll nicht in eine Signalisierungsnachricht mit dem gleichen Zweck gemäß dem anderen Signalisierungsprotokoll umsetzen lässt. Bei dem erfindungsgemäßen Verfahren treten diese Transformationsfehler nur für einen Teil der weiterzuleitenden Signalisierungsnachrichten auf.

Beim erfindungsgemäßen Verfahren wird abhängig vom Zieldatum für Signalisierungsnachrichten mit einem Zieldatum, das eine Zieleinheit angibt oder betrifft, die eine Protokollumsetzung erfordert, jeweils eine umgesetzte Signalisierungsnachricht erzeugt und weitergeleitet. Die umgesetzte Signalisierungsnachricht wird gemäß einem anderen Signalisierungsprotokoll als das Signalisierungsprotokoll der empfangenen Signalisierungsnachricht unter Beachtung von Vorgaben zur Umsetzung der Signalisierungsnachrichten des einen Signalisierungsprotokolls in Signalisierungsnachrichten des anderen Signalisierungsprotokolls erzeugt. Zusätzlich werden abhängig vom Zieldatum für Signalisierungsnachrichten mit einem Zieldatum, das eine Zieleinheit angibt oder betrifft, die keine Protokollumsetzung erfordert, die Signalisierungsnachrichten ohne Umsetzung auf ein anderes Signalisierungsprotokoll weitergeleitet. Ohne Umsetzung auf ein anderes Signalisierungsprotokoll bedeutet bei einer Ausgestaltung insbesondere, dass auch keine Umsetzung auf ein internes Signalisierungsprotokoll der für die Weiterleitung benutzten Vorrichtung ausgeführt wird.

Vorgaben zur Umsetzung der Signalisierungsnachrichten sind beispielsweise in internationalen Standards vorgegeben. Grundsätzlich werden dabei aus Signalisierungsnachrichten mit einem bestimmten Signalisierungszweck gemäß dem ursprünglichen Signalisierungsprotokoll Signalisierungsnachrichten mit dem gleichen oder einem ähnlichen Zweck gemäß dem Zielprotoköll der Umsetzung erzeugt. Signalisierungsdaten werden üblicherweise an anderen Positionen in der umgesetzten Signalisierungsnachricht angeordnet als in der empfangenen Signalisierungsnachricht.

Bei einer Weiterbildung des erfindungsgemäßen Verfahrens werden die Signalisierungsnachrichten von einer Signalisierungseinrichtung empfangen, die das Erzeugen und Weiterleiten einer umgesetzten Signalisierungsnachricht und das Weiterleiten ohne Umsetzung des Signalisierungsprotokolls steuert. Die Signalisierungseinrichtung empfängt Signalisierungsnachrichten von verschiedenen Kommunikationseinrichtungen, z.B. von Telefonendgeräten, von Datenverarbeitungsanlagen, von Diensterbringungsrechnern (Server), von Anwendungsprogrammen oder von Netzübergangseinheiten zwischen verschiedenen Datenübergangsnetzen. In der Signalisierungseinrichtung werden bei einer Weiterbildung auch weitere zentrale Funktionen erbracht, beispielsweise:
- die Protokollumsetzung,
- die Steuerung des Zugangs von Endgeräten oder zentralen Einheiten von lokalen Datenübertragungsnetzen zu einem Datenübertragungsnetz, oder
- zentrale Vermittlungs- bzw. Weiterleitungsaufgaben.

Durch die Erbringung mehrerer Funktionen in einer Signalisierungseinrichtung lassen sich die Funktionen auf einfachere Art erbringen als in voneinander räumlich getrennten Funktionseinheiten. Insbesondere ist kein Datenübertragungsnetz zur Kommunikation zwischen den einzelnen Funktionseinheiten zum Erbringen der Funktionen erforderlich.

Eine besondere technische Wirkung wird erreicht, wenn die Signalisierungseinheit auch Funktionen einer Telekommunikationsanlage erbringt, insbesondere Vermittlungsfunktionen in einem Telekommunikationsanlagenverbund. In einem Telekommunikationsanlagenverbund ist der Konfigurationsaufwand für mehrere hundert, mehrere tausend oder sogar mehrere zehntausend Endgeräte beträchtlich. In der Signalisierungseinheit ist dieser Aufwand bei einer Ausgestaltung nur einmal zentral für alle Telekommunikationsanlagen des Verbundes erforderlich. Gehören sehr viele Telekommunikationsanlagen zu dem Verbund, so lässt sich die Konfiguration auch in mehreren zentralen Signalisierungseinrichtungen verteilt speichern, wobei jedoch Mehrfachspeicherungen von Daten in verschiedenen Signalisierungseinrichtungen vermieden werden.

Erbringt die Signalisierungseinrichtung Funktionen einer Telekommunikationsanlage, so lassen sich Telekommunikationsanlagen in dem Verbund betreiben, die gemäß verschiedener Signalisierungsprotokolle zu anderen Telekommunikationsanlagen signalisieren. Durch die Protokollumsetzung wird erreicht, dass auch zwischen Telekommunikationsanlagen signalisiert werden kann, die gemäß unterschiedlicher Signalisierungsprotokolle signalisieren bzw. gemäß von Signalisierungsprotokollen verschiedener Protokollfamilien. Insbesondere wird so der Zusammenschluss von Telekommunikationsanlagen verschiedener Hersteller in einem Telekommunikationsanlagenverbund ermöglicht.

Bei einer anderen Weiterbildung des erfindungsgemäßen Verfahrens erbringt die Signalisierungseinrichtung auch die Funktionen einer Netzzugangseinheit für zentrale Einheiten zum Erbringen von Diensten für eine Vielzahl von Endgeräten mehrerer lokaler Datenübertragungsnetze. Beispiele für lokale Datenübertragungsnetze sind Ethernet-Netze oder sogenannte Token-Netze, die gegebenenfalls über sogenannte Bridges oder Router verbunden sind.

Zwischen den zentralen Einheiten verschiedener lokaler Datenübertragungsnetze mit gleichen und verschiedenen Datenübertragungsverfahren bzw. mit gleichen und verschiedenen Signalisierungsverfahren lassen sich so Signalisierungsdaten und Nutzdaten austauschen.

Bei einer alternativen Weiterbildung erbringt die in der Signalisierungseinrichtung enthaltene Netzzugangseinheit eine Netzzugangsfunktion für Endgeräte eines oder mehrerer lokaler Datenübertragungsnetze. An das lokale Datenübertragungsnetz sind bei einer Ausgestaltung Endgeräte angeschlossen, die auf höheren Protokollebenen gemäß verschiedener Signalisierungsprotokolle signalisieren.

Auf einer mittleren Protokollebene arbeiten die Datenübertragungsnetze bei einer Ausgestaltung gemäß dem Internetprotokoll.

Bei einer nächsten Weiterbildung werden als Signalisierungsprotokolle genutzt:
- Protokolle der H.323-Protokollfamilie der ITU-T (International Telecommunication Union - Telecommunication Standardization Sector), insbesondere die Protokolle H.225, H.245, H.450.x,
- das SIP-Protokoll (Session Initiation Protocol) der IETF (Internet Engineering Task Force),
- ein Signalisierungsprotokoll für die Signalisierung zwischen Telekommunikationsanlagen, vorzugsweise das Protokoll QSIG. Aber auch andere Signalisierungsprotokolle werden genutzt, soweit eine Protokollumsetzung möglich ist.

Bei einer nächsten Weiterbildung wird das Zieldatum mit einer Zugriffsfunktion gelesen, die Zieldaten verschiedener Signalisierungsprotokolle liest. Dies ist möglich, wenn die Zugriffsfunktion zuvor das Signalisierungsprotokoll der Signalisierungsnachricht ermittelt. Dies wird beispielsweise über das Erfassen protokolltypischer Datenwerte bzw. Datenstrukturen oder mit Hilfe eines Protokollkennzeichens in der Signalisierungsnachricht ermöglicht. Danach wird das von der durch das Zieldatum angegebenen Zieleinheit erforderte Protokoll ermittelt. Aufgrund eines Vergleichs des ursprünglichen Signalisierungsprotokolls und des erforderten Signalisierungsprotokolls wird dann die Entscheidung über die Notwendigkeit einer Protokollumsetzung oder über ein Weiterleiten der Signalisierungsnachricht ohne Protokollumsetzung getroffen. Durch diese Verfahrensschritte ist es auf einfache Art möglich, die Entscheidung zu treffen.

Bei einer nächsten Weiterbildung des Verfahrens zum Weiterleiten von Signalisierungsnachrichten wird keine Protokollumsetzung für Signalisierungsprotokolle der gleichen Protokollfamilie gefordert. Dabei gehören zu einer Protokollfamilie beispielsweise ein bestimmtes Grundprotokoll und dessen Weiterentwicklung.

Bei einer nächsten Weiterbildung wird die empfangene Signalisierungsnachricht in einer Speichereinheit gespeichert. Danach wird entschieden, ob eine Protokollumsetzung erforderlich ist oder nicht. Anschließend wird die gespeicherte Signalisierungsnachricht umgesetzt oder weitergeleitet, ohne eine Protokollumsetzung durchzuführen. Das Verwenden einer Speichereinheit ist eine einfache Maßnahme, um die Signalisierungsnachricht bis zur Entscheidung über eine Protokollumsetzung oder gegen eine Protokollumsetzung aufzubewahren.

Bei einer anderen Weiterbildung betrifft die Signalisierungsnachricht eine Signalisierung für die Übertragung von Sprachdaten oder für die Erbringung eines zusätzlichen Leistungsmerkmals bei der Übertragung von Sprachdaten. Die zusätzlichen Leistungsmerkmale geben Dienste an, die über die einfache Übertragung der Sprachdaten hinausgehen, z.B. eine Rufumleitung, eine Konferenzschaltung oder einen Rückruf bei Besetzt. Insbesondere ist das Verfahren gemäß der Weiterbildung für die Übertragung von Sprachdaten in Nutzdatenpaketen geeignet, wie es bei der Internettelefonie der Fall ist, die auch VoIP (Voice over Internet Protocol) genannt wird.

Die Erfindung betrifft außerdem ein Programm und eine Vorrichtung zur Durchführung des erfindungsgemäßen Verfahrens und seiner Weiterbildungen. Damit gelten die oben genannten technischen Wirkungen auch für das Programm und für die Vorrichtung.

Bei einer Ausgestaltung enthält die Vorrichtung eine Protokollumsetzungseinheit, die ausgehend von einer Signalisierungsnachricht gemäß einem Signalisierungsprotokoll eine Signalisierungsnachricht mit gleichen oder zumindest ähnlichen Steuereigenschaften gemäß einem anderen Signalisierungsprotokoll erzeugt. Vorrichtungen mit solchen integrierten Protokollumsetzern arbeiten daher ohne externe Signalisierungs-Netzübergangseinheiten bzw. sogenannte Boarder-Proxy-Diensterbringungsrechner. Man spricht in diesem Zusammenhang auch von einer "Multi-Protokollfähigkeit".

Im Folgenden werden Ausführungsbeispiele der Erfindung an Hand der beiliegenden Zeichnungen erläutert. Darin zeigen:
- Figur 1: eine Weiterleitungseinheit und eine wahlweise nutzbare Protokollumsetzeinheit,
- Figur 2: eine Netzzugangseinheit für Diensterbringungsrechner mehrerer lokaler Datenübertragungsnetze und eine in der Netzzugangseinheit enthaltene Protokollumsetzeinheit,
- Figur 3: eine Netzzugangseinheit für die Endgeräte eines lokalen Datenübertragungsnetzes und eine in der Netzzugangseinheit enthaltene Protokollumsetzeinheit, und
- Figur 4: Verfahrensschritte eines Verfahrens zum Weiterleiten von Signalisierungsnachrichten mit wahlweiser Protokollumsetzung.

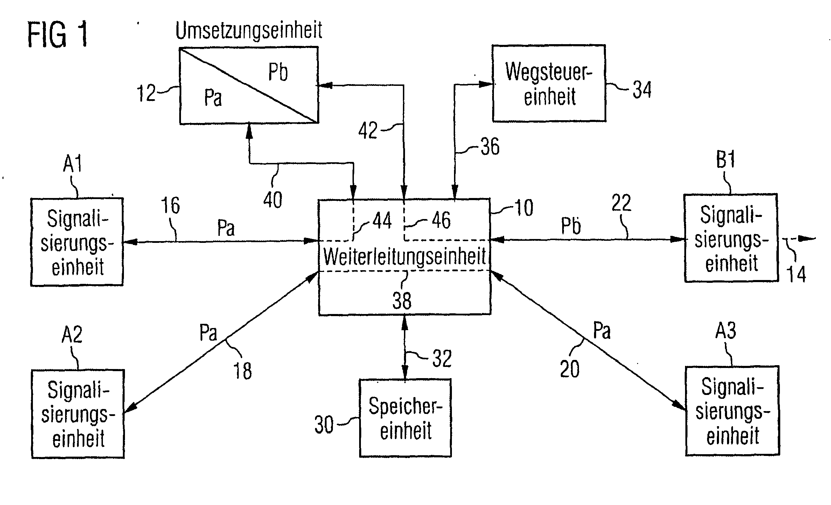

Figur 1 zeigt eine Weiterleitungseinheit 10 und eine davon räumlich getrennte Protokollumsetzungseinheit 12. Die Weiterleitungseinheit 10 dient zum Weiterleiten von Signalisierungsnachrichten, die von bzw. zu Signalisierungseinheiten A1, A2, A3 und B1 gesendet werden. Die Signalisierungseinheiten A1 bis A3 und B1 sind beispielsweise Endgeräte, Einheiten, an die eine Vielzahl von Endgeräten angeschlossen sind, oder Einheiten, die ihrerseits die empfangenen Signalisierungsnachrichten weiterleiten, siehe beispielsweise Pfeil 14 für die Signalisierungseinheit B1.

Die Signalisierungseinheiten A1 bis A3 senden bzw. empfangen Signalisierungsnachrichten gemäß einem Signalisierungsprotokoll Pa, das sich von einem Signalisierungsprotokoll Pb unterscheidet, gemäß dem die Signalisierungseinheiten B1 Signalisierungsnachrichten empfängt und sendet. Signalisierungsnachrichten gemäß den Signalisierungsprotokollen Pa bzw. Pb werden über Übertragungsstrecken 16 bis 22 zwischen den Signalisierungseinheiten A1 bis A3 und B1 auf der einen Seite und der Weiterleitungseinheit 10 auf der anderen Seite ausgetauscht. Die Signalisierungsnachrichten gemäß der Signalisierungsprotokolle Pa und Pb lassen sich mit Hilfe der Protokollumsetzungseinheit 12 in entsprechende Signalisierungsnachrichten des jeweils anderen Protokolls nach einer vorgegebenen Transformationsvorschrift umsetzen.

Die Weiterleitungseinheit 10 hat außerdem Zugriff auf eine Speichereinheit 30, siehe Pfeil 32, in der empfangene Signalisierungsnachrichten zwischengespeichert werden, bis eine Entscheidung darüber getroffen worden ist, ob eine Protokollumsetzung erforderlich ist oder nicht. Außerdem stellt die Weiterleitungseinheit 10 bspw. Anfragen bei einer Wegsteuereinheit 34, siehe Pfeil 36, um die Signalisierungseinheit zu ermitteln, an die eine empfangene Signalisierungsnachricht weitergeleitet werden muss.

Empfängt die Weiterleitungseinheit 10 beispielsweise eine Signalisierungsnachricht von der Signalisierungseinheit A2 an die Signalisierungseinheit A3 über die Übertragungsstrecke 18, so ermittelt eine Steuereinheit der Weiterleitungseinheit 10, dass beide Signalisierungseinheiten A2 und A3 gemäß demselben Signalisierungsprotokoll signalisieren. Eine Protokollumsetzung ist deshalb nicht erforderlich. Die über die Übertragungsstrecke 18 empfangene Signalisierungsnachricht wird deshalb ohne Protokollumsetzung über die Übertragungsstrecke 20 an die Signalisierungseinheit A3 weitergeleitet, siehe gestrichelte Linie 38. Ebenso werden von der Signalisierungseinheit A3 über die Übertragungsstrecke 20 kommende Signalisierungsnachrichten für die Signalisierungseinheit A2 ohne Protokollumsetzung an die Signalisierungseinheit A2 weitergeleitet.

Wird dagegen in der Weiterleitungseinheit 10 eine von der Signalisierungseinheit A1 für die Signalisierungseinheit B1 bestimmte Signalisierungsnachricht über die Übertragungsstrecke 16 empfangen, so stellt die Steuereinheit der Weiterleitungseinheit 10 fest, dass die die Signalisierungsnachricht sendende Signalisierungseinheit A1 und die die Signalisierungsnachricht empfangende Signalisierungseinheit B1 gemäß verschiedener Signalisierungsprotokolle Pa und Pb signalisieren. Deshalb bezieht die Steuereinheit der Weiterleitungseinheit 10 automatisch die Protokollumsetzungseinheit 12 in die Bearbeitung der empfangenen Signalisierungsnachricht ein. Die empfangene Signalisierungsnachricht wird über eine Übertragungsstrecke 40 von der Weiterleitungseinheit 10 zu der Protokollumsetzungseinheit 12 gesendet und dort in eine Signalisierungsnachricht gemäß dem Signalisierungsprotokoll Pb umgesetzt. Anschließend sendet die Protokollumsetzungseinheit 12 die umgesetzte Signalisierungsnachricht über eine Übertragungsstrecke 42 an die Weiterleitungseinheit 10 zurück. Die Weiterleitungseinheit 10 leitet die umgesetzte Signalisierungsnachricht unter Nutzung der Wegsteuereinheit 34 an die Signalisierungseinheit B1 weiter.

Die Einbeziehung der Protokollumsetzungseinheit 12 in die Weiterleitung ist durch gestrichelte Linien 44 und 46 innerhalb der Weiterleitungseinheit 10 dargestellt. Ebenso werden von der Signalisierungseinheit B1 für die Signalisierungseinheit A1 bestimmte Signalisierungsnachrichten gemäß dem Signalisierungsprotokoll Pb von der Weiterleitungseinheit 10 an die Umsetzungseinheit 12 weitergeleitet, dort in Signalisierungsnachrichten gemäß dem Signalisierungsprotokoll Pa umgesetzt, und als umgesetzte Signalisierungsnachrichten an die Weiterleitungseinheit 10 weitergeleitet. Die Weiterleitungseinheit 10 leitet dann ihrerseits die umgesetzte Signalisierungsnachricht an die Signalisierungseinheit A1 weiter.

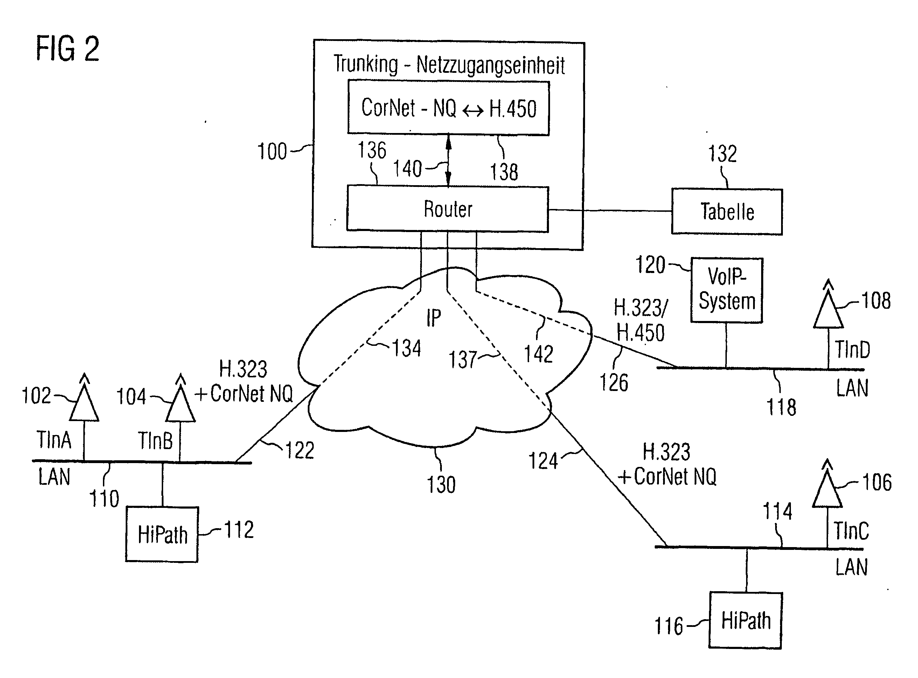

Figur 2 zeigt eine sogenannte Trunking-Netzzugangseinheit 100, die auch als Gatekeeper bezeichnet wird und die Netzzugangsfunktionen für Diensterbringungsrechner 112, 116 und 120 erbringt. Die Diensterbringungsrechner 112, 116 und 120 erbringen Dienste für Endgeräte 102, 104, 106 und 108, die in dieser Reihenfolge Teilnehmern TlnA, TlnB, TlnC und TlnD zugeordnet sind.

Die Endgeräte 102 und 104 sind an ein lokales Datenübertragungsnetz 110 angeschlossen, an das auch der Diensterbringungsrechner 112 angeschlossen ist, der Funktionen einer Telekommunikationsanlage erbringt. Das Endgerät 106 ist an ein lokales Datenübertragungsnetz 114 angeschlossen, z.B. an ein Ethernet. An das lokale Datenübertragungsnetz 114 ist außerdem der Diensterbringungsrechner 116 angeschlossen, der für den Teilnehmer TlnC Funktionen einer Telekommunikationsanlage erbringt. Das Endgerät 108 ist an ein lokales Datenübertragungsnetz 118 angeschlossen, an welchem auch der Diensterbringungsrechner 120 angeschlossen ist, der für die am lokalen Datenübertragungsnetz 118 angeschlossenen Endgeräte von Teilnehmern TlnD die Funktionen einer Telekommunikationsanlage erbringt.

Die lokalen Datenübertragungsnetze 110, 114 und 118 haben meist eine Reichweite kleiner als zehn Kilometer, typischerweise kleiner als ein Kilometer und sind bspw. innerhalb eines Gebäudes angeordnet. Die lokalen Datenübertragungsnetze 110, 114 und 118 sind in dieser Reihenfolge über Übertragungsstrecken 122, 124 und 126 mit einem zur Übertragung von Sprachdaten geeigneten Weitverkehrsnetz 130 verbunden, z.B. mit dem gemäß Internetprotokoll arbeitenden Internet. Auch die Netzzugangseinheit 100 lässt sich über das Weitverkehrsnetz 130 erreichen. Das Weitverkehrsnetz 130 dient zum Datenaustausch über Entfernungen wesentlich größer als zehn Kilometer, typischerweise über mehr als hundert Kilometer.

Die Diensterbringungsrechner 112, 116 und 120 erbringen gemeinsam mit der Netzzugangseinheit 100 die Funktionen eines Telekommunikationsanlagenverbundes, der es den Teilnehmern TlnA bis TlnD erlaubt, über nur in dem Telekommunikationsanlagenverbund festgelegte Rufnummern zu telefonieren. Die Netzzugangseinheit 100 hat zum Erbringen der Funktionen des Telekommunikationsanlagenverbundes Zugriff auf eine Speichereinheit 132, in der zum Einen eine Tabelle gespeichert ist, in der vermerkt ist, welches Endgerät 102 bis 108 welchem Diensterbringungsrechner 112, 116 bzw. 120 zugeordnet ist. Zum Anderen ist in der Tabelle vermerkt, welches Signalisierungsprotokoll für die Signalisierung mit dem Diensterbringungsrechner 112, 116 bzw. 120 genutzt wird. Im vorliegenden Ausführungsbeispiel sind die beiden Diensterbringungsrechner 112 und 116 beispielsweise von der Firma SIEMENS AG hergestellt worden, so dass die Signalisierung gemäß einem firmeninternen Protokoll für die Signalisierung zwischen Vermittlungsstellen durchgeführt wird. Dieses Protokoll ist beispielsweise das Protokoll CorNetNQ, das auf dem Protokoll QSIG aufbaut, das von der ETSI (European Telecommunication Standard Institute) standardisiert worden ist. Die Diensterbringungsrechner 112 und 116 sind beispielsweise vom Typ HiPath 3000, 4000 oder 5000. Der Diensterbringungsrechner 120 wurde dagegen von einer anderen Firma hergestellt und signalisiert in Zusammenhang mit den Funktionen im Telekommunikationsanlagenverbund gemäß dem Protokoll H.323/H.450 bzw. H.450.x, wobei x eine natürliche Zahl zur Bezeichnung eines speziellen Standards für ein spezielles zusätzliches Leistungsmerkmal ist.

Als Signalisierungsprotokoll zwischen den Diensterbringungsrechnern 112, 116 und 120 auf der einen Seite und der Netzzugangseinheit 100 auf der anderen Seite wird im Ausführungsbeispiel ein Signalisierungsprotokoll der Protokollfamilie H.323 genutzt, insbesondere das Signalisierungsprotokolle H.225 bzw. H.245.

Obwohl die Signalisierung gemäß der Protokollfamilie H.323 in den einschlägigen Standards detailliert erläutert ist, sollen im Folgenden einige Signalisierungsnachrichten erläutert werden, um den Bezug zum erfindungsgemäßen Verfahren besser darstellen zu können. Es sei angenommen, dass der Diensterbringungsrechner 112 eine Signalisierungsnachricht an das Endgerät 106 bzw. an den für dieses Endgerät zuständigen Diensterbringungsrechner 116 senden möchte. Im Diensterbringungsrechner 112 ist nicht bekannt, dass das Endgerät 106 zum Diensterbringungsrechner 116 gehört. Auch die Adresse des Diensterbringungsrechners 116 ist im Diensterbringungsrechner 112 nicht bekannt. Der Diensterbringungsrechner 112 sendet an die Netzzugangseinheit 100 eine Admission-Request-Nachricht, die mit einer Admission-Confirmation-Nachricht bestätigt wird. Danach richtet der Diensterbringungsrechner 112 eine standardgemäße Setup-Nachricht gemäß H.323 an die Netzzugangseinheit 100. In der H.323-Setup-Nachricht ist eine CorNetNQ-Setup-Nachricht enthalten. In diesem Zusammenhang wird von einem sogenannten Tunnelverfahren gesprochen, das beispielsweise im Standard H.323 Annex M.1 erläutert ist.

Die H.323-Setup-Nachricht wird zur Netzzugangseinheit 100 übertragen, siehe gestrichelte Linie 134. Eine Steuereinheit der Netzzugangseinheit wertet die H.323-Setup-Nachricht aus und stellt dabei fest, dass diese Setup-Nachricht eine CorNetNQ-Nachricht enthält. Die Steuereinheit ermittelt das in der CorNetNQ-Nachricht angegebene Endgerät bzw. den in dieser Nachricht angegebenen Diensterbringungsrechner 116. Gegebenenfalls wird auch der sendende Diensterbringungsrechner 112 bzw. ein die Signalisierungsnachricht verursachendes Endgerät 102, 104 ausgehend von der empfangenen Signalisierungsnachricht ermittelt. Mit Hilfe der Speichereinheit 132 wird dann festgestellt, dass für die getunnelte Signalisierungsnachricht keine Protokollumwandlung erforderlich ist, da der Diensterbringungsrechner 116 Signalisierungsnachrichten gemäß dem Signalisierungsprotokoll CorNetNQ bearbeiten kann. Aus diesem Grund leitet die Netzzugangseinheit 100 eine H.323-Setup-Nachricht an den Diensterbringungsrechner 116 weiter. In der H.323-Setup-Nachricht wird die empfangene CorNetNQ-Nachricht ohne Durchführung einer Protokollumsetzung in der Netzzugangseinheit 100 unverändert, d.h. direkt, an den Diensterbringungsrechner 116 mit Hilfe des Tunnelverfahrens weitergeleitet, siehe gestrichelte Linie 137.

Der Diensterbringungsrechner 116 empfängt die H.323-Setup-Nachricht und bearbeitet die darin enthaltene CorNetNQ-Nachricht protokollgemäß, beispielsweise wird dabei eine Signalisierungsschaltfläche auf einer Anzeigeeinheit des Endgerätes 106 aktiviert.

Sendet dagegen der Diensterbringungsrechner 112 eine H.323-Setup-Nachricht mit einer getunnelten CorNetNQ-Nachricht, z.B. ebenfalls einer Setup-Nachricht, die den Diensterbringungsrechner 120 bzw. das Endgerät 108 betrifft, so wird in der Netzzugangseinheit 100 festgestellt, dass eine Protokollumsetzung der getunnelten Signalisierungsnachricht gemäß dem Protokoll CorNetNQ in eine Signalisierungsnachricht gemäß dem Signalisierungsprotokoll H.323/H.450 erforderlich ist. Die Steuereinheit 136 aktiviert deshalb eine Protokollumsetzungseinheit 138, die die CorNetNQ-Nachricht in eine H.323- bzw. H.450-Signalisierungsnachricht mit dem gleichen Signalisierungszweck umsetzt und die umgesetzte Signalisierungsnachricht an die Wegsteuereinheit 136 zurückgibt, siehe Doppelpfeil 140.

Im vorliegenden Ausführungsbeispiel sendet die Wegsteuereinheit 136 eine von der Protokollumsetzungseinheit 138 erzeugt H.323-Setup-Nachricht, die eine ähnliche Signalisierungswirkung wie die CorNetNQ-Nachricht hat. Diese Nachricht wird an den Diensterbringungsrechner 120 gesendet, siehe gestrichelte Linie 142. Der Diensterbringungsrechner 120 bearbeitet die H.323-Setup-Nachricht und führt die zugehörige Steueraktion aus, z.B. Aktivieren einer Schaltfläche am Endgerät 108.

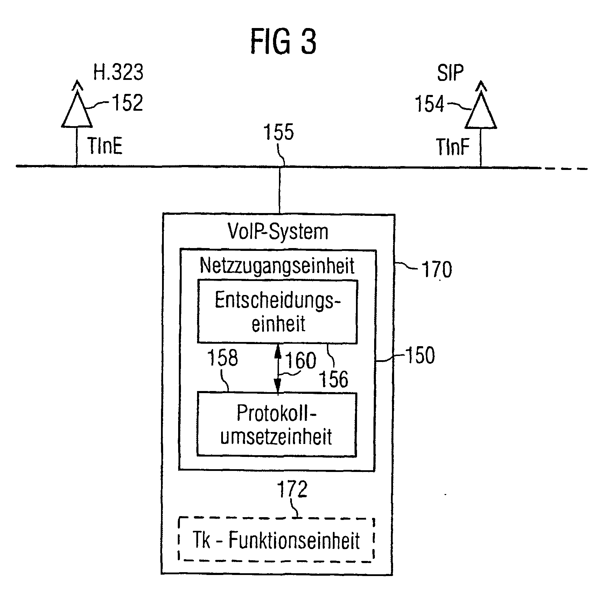

Figur 3 zeigt ein anderes Ausführungsbeispiel mit einer Netzzugangseinheit 150 für die Endgeräte 152, 154 eines lokalen Datenübertragungsnetzes 155. Das Endgerät 152 wird von einem Teilnehmer TlnE genutzt und signalisiert gemäß den Protokollen der Protokollfamilie H.323. Das Endgerät 154 wird von einem Teilnehmer TlnF genutzt und signalisiert beispielsweise gemäß dem Protokoll SIP. Beide Endgeräte 152 bis 154 können dennoch Signalisierungsdaten und Nutzdaten austauschen, weil die Netzzugangseinheit 150 auch eine Protokollumsetzung ermöglicht. Beispielsweise richtet das Endgerät 152 eine H.323-Setup-Nachricht an die Netzzugangseinheit 150. In der H.323-Setup-Nachricht ist als Ziel der Nachricht das Endgerät 154 angegeben. Zum Übermitteln der H.323-Setup-Nachricht an die Netzzugangseinheit 150 wird beispielsweise eine dem Endgerät 152 bekannte Adresse der Netzzugangseinheit 150 für das Weiterleiten von Setup-Nachrichten genutzt.

Die Netzzugangseinheit 150 enthält eine Entscheidungseinheit 156, die feststellt, ob bezüglich der empfangenen Signalisierungsnachricht eine Protokollumsetzung erforderlich ist oder nicht. Im Fall einer Signalisierungsnachricht von dem Endgerät 152 an das Endgerät 154 ist eine Protokollumsetzung erforderlich. Deshalb bezieht die Entscheidungseinheit 156 eine Protokollumsetzungseinheit 158 ein, die aus der H.323-Setup-Nachricht eine SIP-Invite-Nachricht erzeugt, siehe Doppelpfeil 160. Anschließend sendet die Netzzugangseinheit 150 an das Endgerät 154 die umgesetzte Signalisierungsnachricht. Das Endgerät 154 antwortet gemäß SIP-Protokoll der Netzzugangseinheit 150. Die Netzzugangseinheit 150 führt für die Antwortnachricht eine Protokollumsetzung durch und leitet die umgesetzte Antwortnachricht an das Endgerät 152 weiter.

Sendet das Endgerät 152 dagegen an die Netzzugangseinheit 150 eine Signalisierungsnachricht, die für ein Endgerät bestimmt ist, das gemäß H.323-Protokollfamilie arbeitet, so trifft die Entscheidungseinheit 156 die Entscheidung, dass eine Protokollumsetzung nicht erforderlich ist. Die empfangene Signalisierungsnachricht wird in diesem Fall unverändert oder doch im wesentlichen unverändert an das Zielendgerät weitergeleitet.

Bei einem anderen Ausführungsbeispiel ist die Netzzugangseinheit 150 Bestandteil eines VoIP-Systems 170, das neben der Netzzugangseinheit 150 auch eine Telekommunikationsanlagen-Funktionseinheit 172 enthält, die Funktionen einer Telekommunikationsanlage erbringt. Das System 170 erbringt die Funktionen einer einzelnen Telekommunikationsanlage oder ist in einen Telekommunikationsanlagenverbund eingebettet.

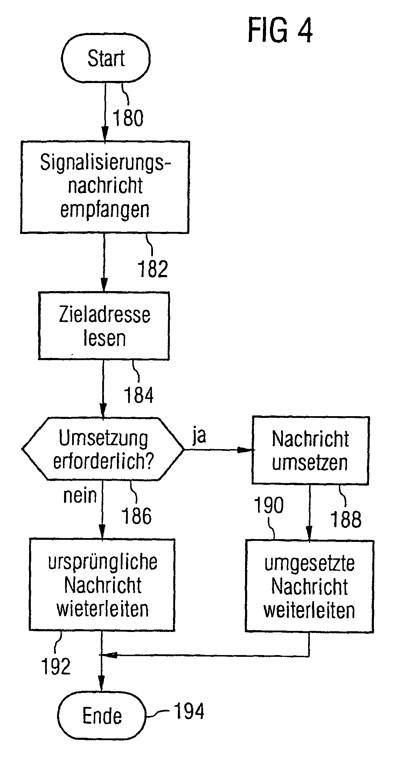

Figur 4 zeigt Verfahrensschritte eines Verfahrens zum Weiterleiten von Signalisierungsnachrichten mit wahlweiser Protokollumsetzung. Das Verfahren beginnt in einem Verfahrensschritt 180. In einem folgenden Verfahrensschritt 182 wird eine Signalisierungsnachricht gemäß einem ursprünglichen Signalisierungsprotokoll empfangen.

In einem Verfahrensschritt 184 wird eine Zieladresse aus der ursprünglichen Signalisierungsnachricht gelesen oder aufgrund der in der Signalisierungsnachricht enthaltenen Angaben ermittelt. In einem Verfahrensschritt 186 wird abhängig von der Zieladresse und bspw. abhängig vom Signalisierungsprotokoll der empfangenen Signalisierungsnachricht geprüft, ob eine Protokollumsetzung erforderlich ist. Ist dies der Fall, so folgt unmittelbar nach dem Verfahrensschritt 186 ein Verfahrensschritt 188, in dem die ursprüngliche Signalisierungsnachricht in eine Signalisierungsnachricht gemäß einem anderen Signalisierungsprotokoll umgesetzt wird. Anschließend wird die umgesetzte Signalisierungsnachricht in einem Verfahrensschritt 190 weitergeleitet.

Wird dagegen im Verfahrensschritt 186 festgestellt, dass eine Protokollumsetzung nicht erforderlich ist, so folgt unmittelbar nach dem Verfahrensschritt 186 ein Verfahrensschritt 192.

Im Verfahrensschritt 192 wird die ursprüngliche Signalisierungsnachricht unverändert weitergeleitet. Sowohl nach dem Verfahrensschritt 192 als auch nach dem Verfahrensschritt 190 wird das Verfahren in einem Verfahrensschritt 194 beendet.

Die Verfahrensschritte 180 bis 194 werden unter Beteiligung der Weiterleitungseinheit 10, der Netzzugangseinheit 100 bzw. der Netzzugangseinheit 150 mit elektronischen Schaltungen ausgeführt, die keinen Mikroprozessor enthalten, oder beim Ausführen von Programmbefehlen eines Programms oder mehrerer Programme durch mindestens einen Mikroprozessor.

An Stelle der erwähnten Signalisierungsprotokolle werden bei anderen Ausführungsbeispielen andere Signalisierungsprotokolle verwendet.

## Patentansprüche

1. Verfahren zum Weiterleiten von Signalisierungsnachrichten, mit einer Ursprungseinheit (102, 104, 112) in einem ersten Netzwerk (110), wobei die Ursprungseinheit ein erstes Signalisierungsprotokoll unterstützt,
mit einer Zieleinheit (106, 108, 116, 120) in einem zweiten Netzwerk (114, 118), wobei die Zieleinheit ein zweites Signalisierungsprotokoll unterstützt, und
mit einem das erste und das zweite Netzwerk (110, 114, 118) verbindenden dritten Netzwerk (130), und
mit einer im dritten Netzwerk (130) angeordneten Netzzugangseinheit (100),
- wobei von der Ursprungseinheit (102,104, 112) eine Signalisierungsnachrichten über das dritte Netzwerk (130) getunnelt an die Netzzugangseinheit (100) übermittelt wird,
- wobei durch die Netzzugangseinheit (100) anhand eines in der Signalisierungsnachricht enthaltenen, die Zieleinheit (106, 108, 116, 120) identifizierenden Zieldatums ermittelt wird, ob das erste und das zweite Signalisierungsprotokoll identisch sind,
- wobei in Fällen, in denen das erste und das zweite Signalisierungsprotokoll nicht identisch sind, die Signalisierungsnachricht in das zweite Signalisierungsprotokoll umgesetzt und über das dritte Netzwerk (130) getunnelt an die Zieleinheit (106, 108, 116, 120) übermittelt wird, und
- wobei in Fällen, in denen das erste und das zweite Signalisierungsprotokoll identisch sind, die Signalisierungsnachricht unverändert über das dritte Netzwerk (130)getunnelt an die Zieleinheit (106, 108, 116, 120) übermittelt wird.

2. Verfahren nach Anspruch 1,
**dadurch gekennzeichnet,**
**dass** die Netzzugangseinheit (100) die Protokollumsetzung selbst ausführt.

3. Verfahren nach Anspruch 1 oder Anspruch 2,
**dadurch gekennzeichnet,**
**dass** die Netzzugangseinheit (100) Funktionen einer Telekommunikationsanlage erbringt, die vorzugsweise zum Vermitteln von Verbindungen für die Übertragung von Gesprächsdaten in einem privaten Datenübertragungsnetz dient.

4. Verfahren nach einem der vorhergehenden Ansprüche,
**dadurch gekennzeichnet,**
**dass** die Netzzugangseinheit (100) Netzzugangsfunktionen für zentrale Einheiten mindestens zweier lokaler Datenübertragungsnetze (110, 114) erbringt, wobei die zentralen Einheiten jeweils für eine Vielzahl von Endgeräten eines Datenübertragungsnetzes Dienste erbringen, oder
**dass** die Netzzugangseinheit (100) eine Netzzugangsfunktion für Endgeräte (152, 154) mindestens eines lokalen Datenübertragungsnetzes (154) erbringt, und/oder
**dass** das Datenübertragungsnetz gemäß Internetprotokoll oder gemäß einem darauf aufbauenden Protokoll arbeitet.

5. Verfahren nach einem der vorhergehenden Ansprüche,
**dadurch gekennzeichnet,**
**dass** ein Signalisierungsprotokoll ein Signalisierungsprotokoll der H.323-Protokollfamilie oder ein auf einem solchen Signalisierungsprotokoll aufbauendes Signalisierungsprotokoll ist, und/oder
**dass** ein Signalisierungsprotokoll das SIP-Protokoll oder ein darauf aufbauendes Protokoll ist, und/oder
**dass** ein Signalisierungsprotokoll ein Signalisierungsprotokoll für die Signalisierung zwischen Telekommunikationsanlagen ist, vorzugsweise das Protokoll QSIG oder ein darauf aufbauendes Protokoll, insbesondere ein proprietäres Signalisierungsprotokoll.

6. Verfahren nach einem der vorhergehenden Ansprüche,
**gekennzeichnet durch** die Schritte:
- Lesen (184) des Zieldatums mit einer Zugriffsfunktion, die Zieldaten verschiedener Signalisierungsprotokolle liest,
- Ermitteln des ersten Signalisierungsprotokolls der empfangenen Signalisierungsnachricht,
- Ermitteln des von der **durch** das Zieldatum angegebenen oder betroffenen Zieleinheit erforderten zweiten Signalisierungsprotokolls,
- Vergleichen des ersten Signalisierungsprotokolls mit dem zweiten Signalisierungsprotokolls,
- Treffen der Entscheidung über die Umsetzung oder die Weiterleitung der Signalisierungsnacht ohne Umsetzung abhängig vom Ergebnis des Vergleichens.

7. Verfahren nach einem der vorhergehenden Ansprüche,
**dadurch gekennzeichnet,**
**dass** keine Protokollumsetzung für Signalisierungsprotokolle der gleichen Protokollfamilie erfordert wird.

8. Verfahren nach einem der vorhergehenden Ansprüche,
**gekennzeichnet durch** die Schritte:
- Speichern der empfangenen Signalisierungsnachricht in einer Speichereinheit (30),
- Entscheiden für oder gegen eine Protokollumsetzung nach dem Speichern,
- nach dem Entscheiden Umsetzen der gespeicherten Signalisierungsnachricht oder Weiterleiten der gespeicherten Signalisierungsnachricht ohne Protokollumsetzung.

9. Verfahren nach einem der vorhergehenden Ansprüche,
**dadurch gekennzeichnet,**
**dass** die Signalisierungsnachrichten eine Signalisierung für die Übertragung von Sprachdaten, insbesondere in Nutzdatenpaketen, betreffen, und/oder
**dass** die Signalisierungsnachrichten die Erbringung von zusätzlichen Leistungsmerkmalen für die Übertragung von Sprachdaten betreffen.

10. Programm mit einer Befehlsfolge, bei deren Ausführung durch einen Prozessor ein Verfahren nach einem der vorhergehenden Ansprüche ausgeführt wird.

11. Netzzugangseinheit (100) zum Weiterleiten von Signalisierungsnachrichten, nach einem Verfahren gemäß einem der Ansprüche 1 bis 9.

12. Netzzugangseinheit (100) nach Anspruch 11,
**gekennzeichnet durch**
eine Protokollumsetzungseinheit, die ausgehend von einer Signalisierungsnachricht gemäß einem ersten Signalisierungsprotokoll eine Signalisierungsnachricht mit gleichen Steuereigenschaften gemäß einem zweiten Signalisierungsprotokoll erzeugt.

## Claims

1. Method for forwarding signalling messages having an originating unit (102, 104, 112) in a first network (110), with the originating unit supporting a first signalling protocol,
having a destination unit (106, 108, 116, 120) in a second network (114, 118), with the destination unit supporting a second signalling protocol, and
having a third network (130) connecting the first and the second network (110, 114, 118), and
having a network access unit (100) disposed in the third network (130),
- wherein a signalling message from the originating unit (102, 104, 112) is transmitted to the network access unit (100) by tunnelling via the third network (130),
- wherein it is determined by the network access unit (100) on the basis of a destination datum identifying the destination unit (106, 108, 116, 120) and contained in the signalling message whether the first and the second signalling protocols are identical,
- wherein in cases in which the first and the second signalling protocols are not identical, the signalling message is converted into the second signalling protocol and transmitted to the destination unit (106, 108, 116, 120) by tunnelling via the third network (130), and
- wherein in cases in which the first and the second signalling protocols are identical, the signalling message is transmitted unchanged to the destination unit (106, 108, 116, 120) by tunnelling via the third network (130).

2. Method according to claim 1,
**characterised in that**
the network access unit (100) performs the protocol conversion itself.

3. Method according to claim 1 or claim 2,
**characterised in that**
the network access unit (100) provides functions of a telecommunication system which preferably serves for the switching of connections for the transmission of voice data in a private data communication network.

4. Method according to one of the preceding claims,
**characterised in that**
the network access unit (100) provides network access functions for central units of at least two local data communication networks (110, 114), with the central units in each case providing services for a plurality of terminal device of a data communication network, or
**in that** the network access unit (100) provides a network access function for terminal devices (152, 154) of at least one local data communication network (154), and/or
**in that** the data communication network operates according to the internet protocol or according to a protocol that builds thereon.

5. Method according to one of the preceding claims,
**characterised in that**
a signalling protocol is a signalling protocol of the H.323 protocol family or a signalling protocol built on such a signalling protocol, and/or
**in that** a signalling protocol is the SIP protocol or a protocol that builds thereon, and/or
**in that** a signalling protocol is a signalling protocol for the signalling between telecommunication systems, preferably the QSIG protocol or a protocol that builds thereon, in particular a proprietary signalling protocol.

6. Method according to one of the preceding claims,
**characterised by** the steps:
- read (184) the destination datum by means of an access function which reads destination data of various signalling protocols,
- determine the first signalling protocol of the received signalling message,
- determine the second signalling protocol required by the destination unit that is related to or specified by means of the destination datum,
- compare the first signalling protocol with the second signalling protocol,
- make the decision regarding the conversion or the forwarding of the signalling message without conversion, depending on the result of the comparison.

7. Method according to one of the preceding claims,
**characterised in that**
no protocol conversion is required for signalling protocols of the same protocol family.

8. Method according to one of the preceding claims,
**characterised by** the steps:
- store the received signalling message in a storage unit (30),
- decide for or against a protocol conversion after the storage,
- after the decision, convert the stored signalling message or forward the stored signalling message without protocol conversion.

9. Method according to one of the foregoing claims,
**characterised in that**
the signalling messages relate to signalling for the transmission of voice data, in particular in useful data packets, and/or
**in that** the signalling messages relate to the provision of additional service features for the transmission of voice data.

10. Program comprising an instruction sequence, in the execution of which by a processor a method according to one of the preceding claims is performed.

11. Network access unit (100) for forwarding signalling messages according to a method according to one of the claims 1 to 9.

12. Network access unit (100) according to claim 11,
**characterised by**
a protocol conversion unit which, based on a signalling message according to a first signalling protocol, generates a signalling message with the same control characteristics according to a second signalling protocol.

## Revendications

1. Procédé pour transmettre des messages de signalisation, avec une unité source (102, 104, 112) dans un premier réseau (110), ladite unité source supportant un premier protocole de signalisation,
avec une unité cible (106, 108, 116, 120) dans un deuxième réseau (114, 118), ladite unité cible supportant un deuxième protocole de signalisation, et
avec un troisième réseau (130) reliant le premier et le deuxième réseau (110, 114, 118), et
avec une unité d'accès au réseau (100) placée dans le troisième réseau (130),
- dans lequel un message de signalisation est envoyé de manière tunnelisée depuis l'unité source (102, 104, 112) à travers le troisième réseau (130) à l'unité d'accès au réseau (100),
- dans lequel il est déterminé par l'unité d'accès au réseau (100), à l'aide d'une donnée cible contenue dans le message de signalisation et identifiant l'unité cible (106, 108, 116, 120), si le premier et le deuxième protocole de signalisation sont identiques,
- dans lequel, dans le cas où le premier et le deuxième protocole de signalisation ne sont pas identiques, le message de signalisation est converti en ledit deuxième protocole de signalisation et envoyé de manière tunnelisée à travers le troisième réseau (130) à l'unité cible (106, 108, 116, 120), et
- dans lequel, dans le cas où le premier et le deuxième protocole de signalisation sont identiques, le message de signalisation est envoyé inchangé de manière tunnelisée à travers le troisième réseau (130) à l'unité cible (106, 108, 116, 120).

2. Procédé selon la revendication 1,
**caractérisé en ce que**
l'unité d'accès au réseau (100) exécute elle-même la conversion de protocole.

3. Procédé selon la revendication 1 ou la revendication 2,
**caractérisé en ce que**
l'unité d'accès au réseau (100) fournit des fonctions d'une installation de télécommunications qui sert de préférence à commuter des connexions pour la transmission de données de communication dans un réseau privé de transmission de données.

4. Procédé selon l'une des revendications précédentes,
**caractérisé en ce que**
l'unité d'accès au réseau (100) fournit des fonctions d'accès au réseau pour des unités centrales d'au moins deux réseaux locaux de transmission de données (110, 114), lesdites unités centrales fournissant chacune des services pour une pluralité d'appareils terminaux d'un réseau de transmission de données, ou
**en ce que** l'unité d'accès au réseau (100) fournit une fonction d'accès au réseau pour des appareils terminaux (152, 154) d'au moins un réseau local de transmission de données (154), et/ou
**en ce que** le réseau de transmission de données fonctionne suivant le protocole Internet ou suivant un protocole fondé sur celui-ci.

5. Procédé selon l'une des revendications précédentes,
**caractérisé en ce que**
un protocole de signalisation est un protocole de signalisation de la famille des protocoles H.323 ou un protocole de signalisation fondé sur un tel protocole de signalisation, et/ou
**en ce qu'**un protocole de signalisation est le protocole SIP ou un protocole fondé sur celui-ci, et/ou
**en ce qu'**un protocole de signalisation est un protocole de signalisation pour la signalisation entre installations de télécommunications, de préférence le protocole QSIG ou un protocole fondé sur celui-ci, en particulier un protocole propriétaire de signalisation.

6. Procédé selon l'une des revendications précédentes,
**caractérisé par** les étapes :
- lecture (184) de la donnée cible à l'aide d'une fonction d'accès qui lit les données cibles de différents protocoles de signalisation,
- détermination du premier protocole de signalisation du message de signalisation reçu,
- détermination du deuxième protocole de signalisation requis par l'unité cible concernée ou indiquée par la donnée cible,
- comparaison du premier protocole de signalisation avec le deuxième protocole de signalisation,
- prise de décision sur la conversion ou la transmission du message de signalisation sans conversion en fonction du résultat de la comparaison.

7. Procédé selon l'une des revendications précédentes,
**caractérisé en ce que**
aucune conversion de protocole n'est nécessaire pour les protocoles de signalisation d'une même famille de protocoles.

8. Procédé selon l'une des revendications précédentes,
**caractérisé par** les étapes :
- enregistrement du message de signalisation reçu dans une unité de mémoire (30),
- décision pour ou contre une conversion de protocole après l'enregistrement,
- après l'enregistrement conversion du message de signalisation enregistré ou transmission du message de signalisation enregistré sans conversion de protocole.

9. Procédé selon l'une des revendications précédentes,
**caractérisé en ce que**
les messages de signalisation concernent une signalisation pour la transmission de données vocales, notamment dans des paquets de données utiles, et/ou
**en ce que** les messages de signalisation concernent la fourniture de compléments de service pour la transmission de données vocales.

10. Programme contenant une séquence d'instructions à l'exécution desquelles par un processeur un procédé selon l'une des revendications est exécuté.

11. Unité d'accès au réseau (100) pour transmettre des messages de signalisation suivant un procédé selon l'une des revendications 1 à 9.

12. Unité d'accès au réseau (100) selon la revendication 11,
**caractérisée par**
une unité de conversion de protocole qui génère à partir d'un message de signalisation suivant un premier protocole de signalisation un message de signalisation avec les mêmes caractéristiques de commande suivant un deuxième protocole de signalisation.
